# EUROPÄISCHE PATENTSCHRIFT

(11) **EP 3 059 213 B1**
(45) Veröffentlichungstag und Bekanntmachung des Hinweises auf die Patenterteilung: **27.03.2019**
(21) Anmeldenummer: 16153096.9
(22) Anmeldetag: 28.01.2016
(51) Int. Cl.: C03B 23/045, C03B 23/09

(54) **VORRICHTUNG UND VERFAHREN ZUR FORMUNG VON GLASKÖRPERN**
DEVICE AND METHOD FOR SHAPING GLASS BODIES
DISPOSITIF ET PROCEDE DE FORMAGE DE CORPS EN VERRE

(30) Priorität: 23.02.2015 DE 102015002456
(43) Veröffentlichungstag der Anmeldung: 24.08.2016
(73) Patentinhaber: SCHOTT Schweiz AG, 9001 St. Gallen (CH)
(72) Erfinder: Segner, Johannes, 9000 St. Gallen (CH)
(74) Vertreter: Witte, Weller & Partner Patentanwälte mbB

(56) Entgegenhaltungen:
- EP-A1- 1 022 765
- DE-A1-102009 031 689
- US-A- 2 596 899
- US-A- 2 818 683
- US-A- 2 935 819
- US-A- 4 330 317
- US-A- 4 378 989

## Beschreibung

Die Erfindung betrifft eine Vorrichtung zur Formung von Glaskörpern, insbesondere Pharmafläschchen, mit einer Mehrzahl von Bearbeitungsstationen, die jeweils ein Spannfutter zur Aufnahme eines Glaskörpers aufweisen, die jeweils ein Spannfutter zur Aufnahme eines Glaskörpers aufweisen, mit einem Drehantrieb zum rotierenden Antreiben jedes Spannfutters, und mit mindestens einer Heizquelle zur Beheizung des Glaskörpers.

Die Erfindung betrifft ferner ein Verfahren zur Formung von Glaskörpern, insbesondere Pharmafläschchen, insbesondere aus Borosilikatglas, bei dem ein Glaskörper rotierend angetrieben wird, zumindest lokal bis auf seine Erweichungstemperatur aufgeheizt und geformt wird.

Bei der Herstellung von Pharmafläschchen (Vials) werden aus Glasrohren Einzelstücke abgetrennt, um hieraus die Pharmafläschchen zu formen.

Eine solche Vorrichtung und ein solches Verfahren sind aus der US 2 596 899 A bekannt. Hierbei wird ein gemeinsamer Antrieb für einen Drehantrieb der Spannfutter genutzt.

Eine ähnliche Vorrichtung mit einem gemeinsamen Antrieb für alle Spannfutter ist aus der US 2 935 819 bekannt.

Eine weitere Vorrichtung mit nur einem Spannfutter ist aus der US 4 378 989 A bekannt.

Auch wenn die bekannten Glasformmaschinen mehrere Stationen aufweisen, so laufen alle diese Stationen mit einer einheitlichen Drehzahl in der Regel zwischen 2 und 600 U/min, die für alle Phasen der Bearbeitung fest eingestellt wird.

Eine derartige Glasformmaschine ist beispielsweise aus der US 4 330 317 A bekannt.

Vor diesem Hintergrund liegt der Erfindung die Aufgabe zugrunde, eine Vorrichtung zur Formung Glaskörpern zu offenbaren, die insbesondere zur Herstellung von Pharmafläschchen auf möglichst einfache und kostengünstige Weise mit hoher Qualität geeignet ist. Ferner soll auch ein hierzu geeignetes Verfahren angegeben werden.

Diese Aufgabe wird durch eine Vorrichtung zur Formung von Glaskörpern insbesondere Pharmafläschchen, gemäß Anspruch 1 gelöst.

Die Aufgabe der Erfindung wird auf diese Weise vollkommen gelöst.

Da die Glaskörper zwischen ausgewählten Bearbeitungsstationen übergebbar sind, für die die Drehzahl beliebig einstellbar und variierbar ist, kann für jede Glasbearbeitungsphase eine optimale Geschwindigkeit verwendet werden. Auf diese Weise kann insbesondere bei höheren Drehzahlen von mehr als 1000 U/min eine reduzierte Temperatur verwendet werden, wodurch die Abdampfverluste vermindert werden. Auf diese Weise lassen sich die Glasformprozesse deutlich vereinfachen und an die jeweils gegebenen Randbedingungen optimal anpassen.

Vorzugsweise ist die Drehzahl auf einen Wert von mehr als 600 U/min, vorzugsweise auf mindestens 1000 U/min, besonders bevorzugt auf mindestens 2000 U/min einstellbar, ganz besonders bevorzugt auf mindestens 10.000 U/min einstellbar.

Bei derartig hohen Drehzahlen kann die Verformungstemperatur, die üblicherweise im Bereich von 1100 bis 1200 °C liegt, deutlich abgesenkt werden. So ergibt sich durch eine Erhöhung von 600 U/min auf 1000 U/min eine Reduzierung der Verformungstemperatur von ca. 30 K, während weitere Erhöhungen auf z.B. 2000 U/min, 10.000 U/min oder sogar auf 25.000 U/min zu deutlichen Temperaturreduktionen führen (etwa 200 K bei 25.000 U/min).

Dies ermöglicht beispielsweise eine deutliche Reduzierung der Laserleistung bei einem Laser-gestützten Verformungsprozess mit nach außen (über den Radius des Grünlings hinausgehenden) gewölbten Glasbereichen. Dadurch wird die Wirtschaftlichkeit von Laser-gestützter Verformung verbessert, da eine geringere Zahl von Laserquellen oder aber Laserquellen mit geringerer Leistung benötigt werden. Durch die abgesenkte Verarbeitungstemperatur wird die Veränderung der Glaszusammensetzung durch Abdampfung von Glasbestandteilen, wie Boraten oder natriumhaltigen Komponenten, deutlich reduziert. Dadurch wird der Erhalt der chemischen Glaseigenschaften verbessert und gleichzeitig die Kontamination der Glaskörper mit unerwünschten Ablagerungen vermieden.

Die zumindest eine Heizquelle kann als Brenner, Laser, Heißluftdüse, als widerstandsbeheizter Gaserhitzer oder als Infrarotstrahler ausgebildet sein, der den Glaskörper vorzugsweise zumindest teilweise umschließt.

Je nach Drehzahl und Anwendungsfall können auf diese Weise kostengünstigere Heizeinrichtungen, wie etwa widerstandsbeheizte Gaserhitzer, verwendet werden, die mit einer Gastemperatur von 500 °C bis 900 °C arbeiten und im Gegensatz zu herkömmlichen Brennern weitgehend ohne Partikel emittieren. Des Weiteren können Heißluftdüsen oder Infrarotstrahler verwendet werden, die den Glaskörper vorzugsweise zumindest teilweise umschließen.

Gemäß einer weiteren Ausgestaltung der Erfindung ist ferner ein Formkörper vorgesehen, der gegen einen rotierend angetriebenen Glaskörper zustellbar ist, um eine Bodenformung zu unterstützen, wobei der Glaskörper mit einer reduzierten Drehzahl von weniger als 300 U/min angetrieben ist.

Auf diese Weise wird der Ablauf bei der Bodenformung eines Fläschchens vereinfacht. Herkömmlicherweise wird ein Teilbereich eines Glasrohres mit einem Brenner erhitzt und die beiden Rohrenden auseinandergezogen, so dass eine Einschnürung entsteht. Nach Berührung der Innenoberflächen des Rohrs in der Einschnürzone wird das Rohr an der Einschnürung abgetrennt, d.h. der Glasfaden reißt selbsttätig ab. Der Fläschchenboden formt sich bei den nun getrennten Rohrabschnitten durch die Glasoberflächenspannung, wobei während der gesamten Formgebung unterstützend geheizt wird. Für die Maschinentechnik bedeutet dies, dass zusätzlich zur Rotationsbewegung eine Bewegung in Richtung der Rotationsachse realisiert werden muss.

Erfindungsgemäß wird dieser Vorgang nun deutlich vereinfacht. Ein Rohrabschnitt wird an einem Ende auf die Verformungstemperatur erhitzt. Mittels einer von außen wirkenden Form wird ein Teil des Glases zur Rotationsachse gedrückt, während die Rotationsgeschwindigkeit im Vergleich zur Rotationsgeschwindigkeit während der Aufheizphase gedrosselt wird, auf eine Drehzahl von weniger als 300 U/min. Bei fortgesetzter Heizung und langsamer Drehung des Glaskörpers bildet sich zunächst ein offener Boden aus, der sich dann durch die Oberflächenspannung des Glases von selbst verschließt.

Gemäß einer weiteren Ausgestaltung der Erfindung ist mindestens eine Handlingeinrichtung zur Übergabe von Glaskörpern zwischen ausgewählten Bearbeitungsstationen vorgesehen.

Hierdurch wird die Übergabe von Glaskörpern zwischen ausgewählten Bearbeitungsstationen auf gezielte Weise ermöglicht, um einen besonders günstigen Verfahrensablauf zu ermöglichen.

Vorzugsweise können zur Übergabe von Glaskörpern zwischen ausgewählten Bearbeitungsstationen die Spannfutter angehalten werden, um eine Übergabe der Glaskörper im Stillstand zu erlauben.

Dies ermöglicht eine einfachere Handhabung und eine Reduzierung von Ausschuss.

Gemäß einer weiteren Ausgestaltung der Erfindung ist die Heizquelle zur selektiven Beheizung des Glaskörpers ausgebildet und das Spannfutter in Axialrichtung in Bezug auf die Heizquelle positionierbar.

Auf diese Weise kann ein zonenselektives Heizen durchgeführt werden (z.B. eine Laserheizung (Laserstrahlformung)). Hierbei kann die Rotationsgeschwindigkeit als zusätzlicher Parameter der Verformung genutzt werden. Da der zu verformende Glaskörper mittels des Spannfutters in Axialrichtung positionierbar ist, ergeben sich zwei zusätzliche Formparameter, nämlich die Rotationsgeschwindigkeit und damit die auf das Werkstück einwirkende Zentrifugalkraft einerseits, und andererseits die relative Position zu den Formwerkzeugen.

Auf diese Weise lässt sich eine deutlich effektivere Verformung mit geringeren Verformungstemperaturen und einem vereinfachten Verfahrensablauf realisieren.

Um hohe Rotationsgeschwindigkeiten zu ermöglichen, können zur Lagerung des Spannfutters Magnetlager verwendet werden, wodurch besonders hohe Drehzahlen und ein praktisch verschleißfreier Betrieb ermöglicht wird.

Die Erfindung wird ferner durch ein Verfahren zur Formung von Glaskörpern, insbesondere Pharmafläschchen, insbesondere aus Borosilikatglas, gelöst, bei dem unter Verwendung einer Vorrichtung der vorstehend genannten Art ein Glaskörper rotierend angetrieben wird, zumindest lokal bis auf seine Erweichungstemperatur, vorzugsweise bis auf eine Viskosität im Bereich von 10³ bis 10⁵ dPas, aufgeheizt wird und geformt wird, wobei die Drehzahl während des Aufheiz- und/oder Formvorgangs verändert wird.

Wie vorstehend bereits erwähnt, können durch die Veränderung der Drehzahl die Verhältnisse beim Aufheizen und Verformen optimal angepasst werden.

Zur Bodenformung eines Glasfläschchens wird vorzugsweise zunächst ein Glasrohr rotierend angetrieben und erhitzt, anschließend ein Formkörper bei reduzierter Drehzahl, die kleiner als 300 U/min, vorzugsweise kleiner als 100 U/min ist, an einem Ende des Glasrohrs von außen zugestellt, bis sich das Glasrohr schließt und ein Boden ausbildet.

Wie vorstehend bereits erwähnt, kann durch diesen geänderten Formprozess eine deutlich vereinfachte Bodenformung eines Glasfläschchens erreicht werden.

Es hat sich gezeigt, dass die Zeit, die zum kompletten Ausformen des Bodens benötigt wird, mit abnehmender Rotationsgeschwindigkeit abnimmt. Es haben sich Drehzahlen von weniger als 100 U/min als besonders vorteilhaft erwiesen. Durch diese Art der Bodenformung ohne Glasrohrtrennung entfällt die Trennbewegung, das Glashandling in der Anlage und damit das Risiko einer Glasbeschädigung. Darüber hinaus entfällt der Bearbeitungsschritt des Rohröffnens bei dem Rohrteil, das nach der Bodentrennung zum oberen Rand z.B. eines Fläschchens geformt wird. Ferner entfällt die Ausformung des Bodens nach dem Auseinanderziehen der Rohrsegmente durch eine Boden-Form-Matrix.

Erfindungsgemäß wird der Boden vielmehr durch den vom Rand her eingreifenden Formkörper, der als Rollwerkzeug ausgebildet sein kann, verformt.

Gemäß einer weiteren Ausgestaltung der Erfindung wird nach der Ausbildung des Bodens die Drehzahl verändert, d.h. in den meisten Fällen erhöht, bis sich eine gleichmäßige Materialstärke im Bodenbereich einstellt.

Gemäß einer weiteren Ausgestaltung der Erfindung wird zur Formung eines Bypasses, bei dem ein Glasrohr an einem Teilbereich seiner Oberfläche bei Stillstand oder mit einer Drehzahl von weniger als 100 U/min, vorzugsweise von weniger als 50 U/min, lokal bis auf eine Viskosität im Bereich von etwa 10³ bis 10⁵ dPas erhitzt und dann die Drehzahl beschleunigt, bis sich im erhitzten Bereich eine symmetrische Ausbildung nach außen ergibt, um einen Bypass zu erzeugen.

Durch eine kurzzeitige Beschleunigung auf eine höhere Drehzahl wird der erhitzte Bereich hohen Zentrifugalkräften ausgesetzt, wodurch eine symmetrische Auswölbung selbsttätig ausgeformt werden kann, ohne dass es hierzu eines Innendrucks bedarf. Gleichwohl kann der Vorgang der Auswölbung durch zusätzlichen Innendruck unterstützt werden.

Vorzugsweise wird hierbei das Glas im Verformungsbereich bis auf eine Viskosität von etwa 10³ bis 10⁵ dPas, vorzugsweise auf etwa 10⁴ dPas erwärmt und dann ausgehend von der langsamen Drehzahl oder vom Stillstand auf eine Drehzahl von mindestens 1000 U/min, vorzugsweise auf mehr als 2000 U/min, besonders bevorzugt auf mehr als 5000 U/min zur Ausformung des Bypasses erhöht.

Die Drehzahlerhöhung erfolgt hierbei möglichst kurzzeitig, so dass sich eine Beschleunigung von mindestens 200 U/min², vorzugsweise von mindestens 500 U/min², besonders bevorzugt von mindestens 1000 U/min² ergibt.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine stark vereinfachte Darstellung einer Glasformmaschine mit zwei Bearbeitungsstationen;
- Fig. 2a-d: eine schematische Darstellung der verschiedenen Phasen einer Bodenformung für ein Pharmafläschchen;
- Fig. 3a,b: eine schematische Darstellung der verschiedenen Phasen bei der Ausformung eines Bypasses und
- Fig. 4: eine stark vereinfachte Darstellung einer weiteren Vorrichtung zur Glasformung, bei der zusätzlich die Position des Glasrohrs in Bezug auf eine Heizquelle einstellbar ist.

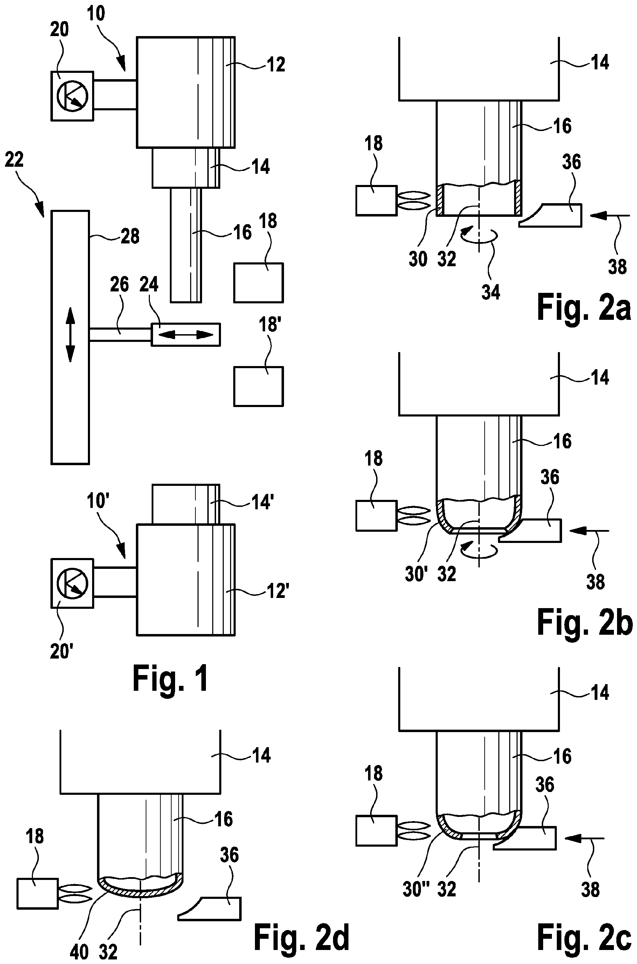

In Fig. 1 ist eine erfindungsgemäße Vorrichtung zur Formung von Glaskörpern stark vereinfacht dargestellt.

Eine erste Station 10 umfasst einen Drehantrieb 12, der mittels einer Steuerung 20 mit variabler Drehzahl, die zwischen 0 und 15.000 U/min stufenlos verstellbar ist, angetrieben werden kann. Vom Drehantrieb 12 wird ein Spannfutter 14 angetrieben, in dem unterschiedliche Glaskörper 16 in Form von Glasrohren eingespannt werden können. Ferner ist mindestens eine Heizeinrichtung 18 vorgesehen. Hierbei kann es sich beispielsweise um einen Brenner, um einen Laser, eine Heißluftdüse, einen widerstandsbeheizten Gaserhitzer oder einen Infrarotstrahler handeln, je nach dem gewünschten Einsatzzweck.

Die Vorrichtung weist ferner eine zweite identisch aufgebaute Station zur Glasformung auf, die mit 10' bezeichnet ist. Wiederum ist ein Spannfutter 14' von einem Drehantrieb 12' mit variabler Drehzahl antreibbar. Die Drehzahl kann mittels der Steuerung 20' vorzugsweise im Bereich zwischen 0 und 15.000 U/min stufenlos variiert werden.

Je nach verwendeten Lagern (hier nicht dargestellt) können auch höhere Drehzahlen in Betracht kommen. Werden beispielsweise Magnetlager verwendet, so können sehr hohe Drehzahlen von z.B. 25.000 U/min praktisch verschleißfrei erreicht werden.

Zur Übergabe von Glaskörpern 16 zwischen den Stationen 10, 10' ist eine Handlingeinrichtung 22 vorgesehen, die hier lediglich beispielhaft angedeutet ist. Die Handlingeinrichtung 22 umfasst einen Greifer 24, mit dem ein Glaskörper 16 von außen umgriffen werden kann und an einem Arm 26 gehalten ist. Der Arm 26 ist entlang einer Führung 28 verfahrbar, so dass mittels der Handlingeinrichtung 22 Glaskörper 16 in das Spannfutter 14 der ersten Station 10 eingesetzt werden können, aus diesen entnommen werden können und auch an das Spannfutter 14' der zweiten Station 10' übergeben werden können.

Selbstverständlich kann die Anlage weitere Stationen umfassen. Hier sind lediglich zwei Stationen 10, 10' und eine zugeordnete Handlingeinrichtung 22 beispielhaft aufgeführt. Zur Übergabe zwischen den Stationen 10, 10' kann die Rotationsgeschwindigkeit auf null abgesenkt werden, so dass die Gefahr einer Beschädigung der Glaskörper bei der Übergabe deutlich reduziert ist.

Im Folgenden werden anhand der Fig. 2a bis 2d die verschiedenen Stationen bei einer erfindungsgemäßen Bodenausformung bei einem Pharmafläschchen näher beschrieben.

Pharmafläschchen (häufig auch als Vials bezeichnet) müssen hohe Anforderungen bezüglich der Qualität der Glaskörper und insbesondere auch bezüglich der Rückstandsfreiheit erfüllen. Pharmafläschchen werden in der Regel als Borosilikatglas hergestellt. Bei der Umformung von Borosilikatglas kann bei den üblichen Verformungstemperaturen, die in der Regel zwischen etwa 1100 °C und 1200 °C liegen, je nach Temperatur und Dauer der Aufheizung Abdampfverluste insbesondere in Form von Boroxid oder Natrium auftreten, was sich nachteilig auf die Qualität der Pharmafläschchen auswirkt und ferner zu Niederschlägen an der Innenseite der Glasfläschchen führen kann, was gleichfalls nachteilig ist. Diese Probleme werden bei der erfindungsgemäßen Bodenformung teilweise umgangen oder zumindest reduziert. Auch wird insgesamt der Bearbeitungsablauf vereinfacht.

Bei der erfindungsgemäßen Bodenformung der Pharmafläschchen wird wie folgt vorgegangen:
Zunächst wird ein Glasrohr 16 an seinem äußeren Ende 30 mittels eines Brenners 18 derart erhitzt, dass das Glasende auf eine Viskosität von etwa 10³ bis 10⁵, vorzugsweise etwa 10⁴ dPas eingestellt wird. Je nach Glasart beträgt diese Temperatur T₄ etwa 1100 bis 1200 °C. Nunmehr wird die Drehzahl von z.B. zunächst 600 U/min gedrosselt, z.B. auf etwa 50 bis 100 U/min.

Bei fortwährender Heizung und langsamer Rotation des Glasrohrs 16 wird nunmehr ein Formkörper 36, der als Formrolle ausgebildet sein kann, gegen das Ende des Glasrohrs 16 zugestellt, wie in Fig. 2a durch den Pfeil 38 angedeutet ist. Durch den Formkörper 36 wird das Ende des Glasrohrs zur Drehachse 32 hin verformt, wie in Fig. 2b dargestellt ist. Es ergibt sich eine Verjüngung am Ende 30' des Glasrohrs 16. Bei weiterer langsamer Rotation des Glasrohrs 16 und weiterer Heizung wird der Formkörper 36 weiter in Richtung auf die Rotationsachse 32 zugestellt, wie in Fig. 2c dargestellt ist. Schließlich schließt sich das Ende des Glasrohrs 16 durch die Oberflächenspannung, so dass sich ein geschlossener Boden 40 ergibt, wie in Fig. 2d dargestellt ist. Der Formkörper 36 kann nunmehr zurückgezogen werden.

Durch eine weitere Variation der Drehzahl, in der Regel eine Erhöhung der Drehzahl, kann nunmehr der Boden 40 gleichmäßig ausgeformt werden. Bei höherer Drehzahl nehmen die Zentrifugalkräfte zu, so dass mehr Material nach außen gedrängt wird, während bei niedrigerer Drehzahl sich mehr Material in der Mitte ansammelt. Auf diese Weise kann durch geeignete Anpassung der Drehzahl eine ebene Ausformung des Bodens mit gleichmäßiger Materialstärke bewirkt werden.

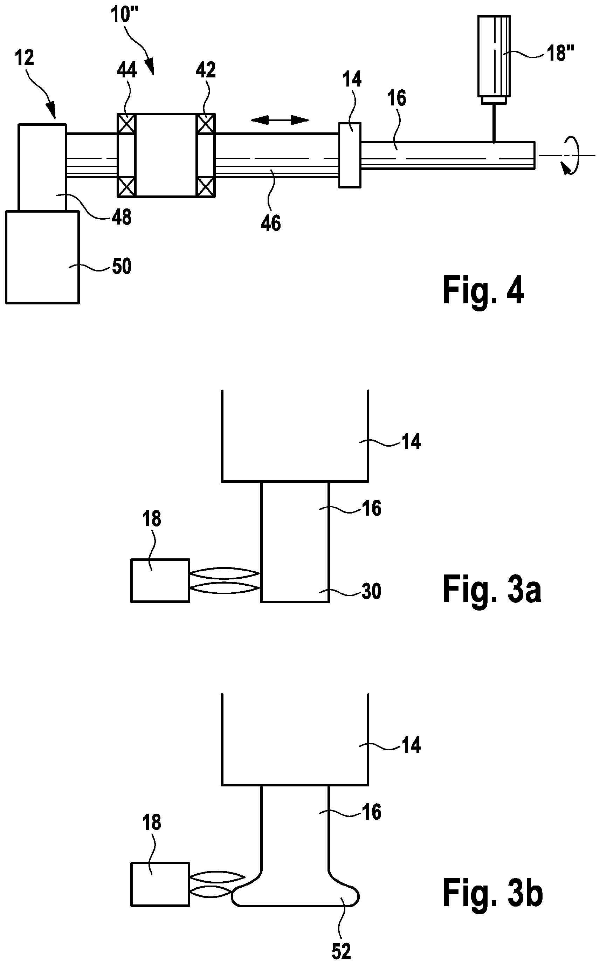

In Fig. 3a und b ist eine weitere Variante des erfindungsgemäßen Verfahrens dargestellt.

Hierbei wird ein sog. Bypass ausgeformt. Es handelt sich hierbei um eine Erweiterung am Ende oder in der Mitte eines Glasrohrs. Ein solcher Bypass wird beispielsweise benötigt, wenn zwei verschiedene Substanzen zunächst voneinander getrennt gespeichert werden sollen und dann zur Benutzung vermischt werden sollen. Als Mischraum in einer entsprechend ausgestalteten Spritze dient hierbei der Bypass.

Zur Erzeugung eines solchen Bypasses wird ein Glasrohr zunächst an seinem Ende etwa mittels eines Brenners 18 auf Erweichungstemperatur aufgeheizt, so dass sich beispielsweise eine Viskosität von etwa 10⁴ dPas einstellt. Nunmehr wird schlagartig die Drehzahl von z.B. zunächst 600 U/min auf 5000 U/min erhöht, was beispielsweise innerhalb einer Minute oder noch schneller erfolgen kann. Durch die schnelle Erhöhung der Drehzahl steigen die Zentrifugalkräfte stark an, so dass sich eine symmetrische Auswölbung im erweichten Bereich ergibt, so dass auf diese Weise ein Bypass 52 am äußeren Ende ausgeformt wird.

Nach der gewünschten Ausformung des Bypasses wird die Heizung abgeschaltet und die Drehzahl wieder bis auf null abgesenkt.

In Fig. 4 ist eine weitere Abwandlung einer erfindungsgemäßen Vorrichtung zur Glasformung schematisch dargestellt und insgesamt mit der Ziffer 10" bezeichnet. Ein Spannfutter 14 ist am äußeren Ende einer Welle 46 vorgesehen, die an zwei Lagern 42, 44, die vorzugsweise als Magnetlager ausgebildet sind, in Axialrichtung positionierbar gelagert ist. Die Welle 46 ist an ihrem Ende über ein Getriebe 48 von einem Motor 50 angetrieben. Durch die axiale Positioniermöglichkeit des Spannfutters 14 und des darin aufgenommenen Glaskörpers 16 kann dieser in Verbindung mit der zugeordneten Heizeinrichtung 18", die beispielsweise als Laser ausgebildet sein kann, in besonderer Weise lokal bearbeitet werden, wobei als Parameter zusätzlich zur Aufheizung durch den Laser die jeweilige Axialposition des Glaskörpers 16 und dessen Drehzahl mit eingehen.

Insgesamt wird auf diese Weise die Variationsmöglichkeit bei der Bearbeitung des Glaskörpers 16 deutlich vergrößert.

## Patentansprüche

1. Vorrichtung zur Formung von Glaskörpern (16), mit einer Mehrzahl von Bearbeitungsstationen (10, 10'), die jeweils ein Spannfutter (14) zur Aufnahme eines Glaskörpers (16) aufweisen, mit einem Drehantrieb (12) zum rotierenden Antreiben jedes Spannfutters (14), mit mindestens einer Heizquelle (18) zur Beheizung der Glaskörper (16), und mit einer Steuerung (20), die mit dem Drehantrieb derart gekoppelt ist, dass die Spannfutter (14) mit variabler Drehzahl antreibbar sind, **dadurch gekennzeichnet, dass** die Glaskörper (16) zwischen ausgewählten Bearbeitungsstationen (10, 10') übergebbar sind, die jeweils individuell in ihrer Drehzahl regelbar sind.

2. Vorrichtung nach Anspruch 1, **dadurch gekennzeichnet, dass** die Drehzahl auf einen Wert von mehr als 600 U/min, vorzugsweise auf mindestens 1000 U/min, besonders bevorzugt auf mindestens 2000 U/min einstellbar ist, ganz besonders bevorzugt auf mindestens 10000 U/min einstellbar ist.

3. Vorrichtung nach Anspruch 1 oder 2, **dadurch gekennzeichnet, dass** zumindest eine Heizquelle (18) vorgesehen ist, die als Brenner, Laser, als Heißluftdüse, als widerstandsbeheizter Gaserhitzer oder als Infrarotstrahler ausgebildet ist, der den Glaskörper (16) vorzugsweise zumindest teilweise umschließt.

4. Vorrichtung nach einem der vorhergehenden Ansprüche, **dadurch gekennzeichnet, dass** ferner ein Formkörper (36) vorgesehen ist, der gegen einen rotierend angetriebenen Glaskörper (16) zustellbar ist, um eine Bodenformung zu unterstützen, wobei ein Mittel zum Antreiben der Glaskörper (16) mit einer reduzierten Drehzahl von weniger als 300 U/min vorgesehen ist.

5. Vorrichtung gemäß einem der vorhergehenden Ansprüche, **gekennzeichnet durch** mindestens eine Handlingeinrichtung (22) zur Übergabe von Glaskörpern (16) zwischen ausgewählten Bearbeitungsstationen (10, 10').

6. Vorrichtung nach einem der vorhergehenden Ansprüche, **dadurch gekennzeichnet, dass** zur Übergabe von Glaskörpern (16) zwischen ausgewählten Bearbeitungsstationen (10, 10') die Spannfutter (14, 14') angehalten werden können, um eine Übergabe der Glaskörper (16) im Stillstand zu erlauben.

7. Vorrichtung nach einem der vorhergehenden Ansprüche, **dadurch gekennzeichnet, dass** die Heizquelle (18) zur selektiven Beheizung des Glaskörpers (16) ausgebildet ist und das Spannfutter (14) in Axialrichtung in Bezug auf die Heizquelle (18") positionierbar ist.

8. Vorrichtung nach einem der vorhergehenden Ansprüche, **dadurch gekennzeichnet, dass** zur Lagerung des Spannfutters (14) Magnetlager (42, 44) vorgesehen sind.

9. Verfahren zur Formung von Glaskörpern (16), bei dem unter Verwendung einer Vorrichtung gemäß einem der vorhergehenden Ansprüche Glaskörper (16) rotierend angetrieben werden, zumindest lokal bis auf ihre Erweichungstemperatur aufgeheizt werden und geformt werden, wobei die Drehzahl während des Aufheiz- und/oder Formvorgangs verändert wird.

10. Verfahren nach Anspruch 9, bei dem Glaskörper (16) in Form von Pharmafläschchen aus Borosilikatglas geformt werden, und bei dem die Glaskörper (16) bis auf eine Erweichungstemperatur aufgeheizt werden, bei der die Viskosität im Bereich von 10³ bis 10⁵ dPas liegt.

11. Verfahren nach Anspruch 9 oder 10, bei dem zur Bodenformung eines Glasfläschchens zunächst ein Glasrohr (16) rotierend angetrieben und erhitzt wird, anschließend ein Formkörper (36) bei reduzierter Drehzahl, die kleiner als 300 U/min, vorzugsweise kleiner als 100 U/min ist, an einem Ende (30) des Glasrohrs (16) von außen zugestellt wird, bis sich das Glasrohr (16) schließt und einen Boden (40) ausbildet.

12. Verfahren nach Anspruch 11, bei dem nach der Ausbildung des Bodens (40) die Drehzahl verändert wird, insbesondere erhöht wird, bis sich eine gleichmäßige Materialstärke im Bodenbereich einstellt.

13. Verfahren nach Anspruch 12 zur Formung eines Bypasses (52), bei dem ein Glasrohr (16) an einem Teilbereich seiner Oberfläche bei Stillstand oder mit einer Drehzahl von weniger als 100 U/min, vorzugsweise von weniger als 50 U/min lokal bis auf eine Viskosität im Bereich von etwa 10³ bis 10⁵ dPas erhitzt wird und dann die Drehzahl beschleunigt wird, bis sich im erhitzten Bereich eine symmetrische Auswölbung nach außen ergibt, um einen Bypass zu erzeugen.

14. Verfahren nach Anspruch 13, bei dem die Drehzahl ausgehend von einer Viskosität des Glases im erhitzten Bereich von etwa 10³ bis 10⁵ dPas, vorzugsweise von etwa 10⁴ dPas auf einen Betrag von mindestens 1000 U/min, vorzugsweise auf mehr als 2000 U/min, besonders bevorzugt auf mehr als 5000 U/min zur Ausformung des Bypasses (52) erhöht wird.

15. Verfahren nach Anspruch 13 oder 14, bei dem die Drehzahl mit mindestens 200 U/min², vorzugsweise mit mindestens 500 U/min², besonders bevorzugt mit mindestens 1000 U/min² beschleunigt wird.

## Claims

1. A device for the forming of glass bodies (16), comprising a plurality of processing stations (10, 10'), each of which having a clamping chuck (14) for receiving a glass body (16) and a rotary drive (12) for driving each clamping chuck (14) rotatingly, comprising at least one heat source (18) for heating the glass body (16), and further comprising a controller (20) which is coupled to the rotary drive in such a way that the clamping chuck (14) can be driven at varying rotational speed, **characterized in that** the glass bodies (16) can be moved between selected processing stations (10, 10') which can individually be controlled with respect to their rotational speed.

2. The device of claim 1, **characterized in that** the rotational speed can be adjusted to a value of more than 600 rpm, preferably to at least 1000 rpm, particularly preferred to at least 2000 rpm, mostly preferred to at least 10000 rpm.

3. The device of claim 1 or 2, **characterized in that** at least one heat source (18) is provided which is configured as a burner, a laser, a hot-air nozzle, a resistance-heated gas heater or as an infrared radiator which preferably surrounds the glass body (16) at least partially from the outside.

4. The device of any of the preceding claims, **characterized in that** further a shaping body (36) is provided which can be advanced against the rotatingly driven glass body (16) to assist a bottom forming, wherein the glass body (16) is driven with a reduced rotational speed of less than 300 rpm.

5. The device of any of the preceding claims, **characterized by** at least one handling device (22) for transferring glass bodies (16) between selected processing stations (10, 10').

6. The device of any of the preceding claims, **characterized in that** for transferring glass bodies (16) between selected processing stations (10, 10') the clamping chucks (14, 14') can be stopped to allow for a transfer of the glass bodies (16) while being at a standstill.

7. The device of any of the preceding claims, **characterized in that** the heat source (18) is configured for selectively heating the glass body (16), and wherein the clamping chuck (14) can be positioned in axial direction with respect to the heat source (18").

8. The device of any of the preceding claims, **characterized in that** magnetic bearings (42, 44) are provided for the bearing of the clamping chuck (14).

9. A method for the shaping of glass bodies (16), wherein using a device according to any of the preceding claims glass bodies (16) are driven rotatingly, are heated at least locally to their softening temperature, while the rotational speed during the heating and/or forming process is varied.

10. The method of claim 9, wherein glass bodies (16) as pharmaceutical vials made of borosilicate glass are formed, and wherein the glass bodies (16) are heated up to a softening temperature, wherein the viscosity is in the range of 10³ to 10⁵ dPas.

11. The method of claim 9 or 10, wherein for the bottom forming of a glass vial initially a glass tube (16) is driven rotatingly and is heated, thereafter a shaping body (36) is advanced from the outside at reduced rotational speed which is lower than 300 rpm, preferably lower than 100 rpm, until the glass bottom (16) closes and a bottom (40) is formed.

12. The method of claim 11, wherein after the forming of the body (40) the rotational speed is varied, in particular increased, until an even material thickness results in the bottom region.

13. The method of claim 12 for forming a bypass (52), wherein a glass tube (16) is locally heated up to a viscosity in the range of about 10³ to 10⁵ dPas at a partial region at its surface while being at a standstill or at a rotational speed of less than 100 rpm, and thereafter the rotational speed is accelerated, until in the heated region a symmetrical arching to the outside results, to thereby generate a bypass.

14. The method of claim 13, wherein the rotational speed, starting from a viscosity of the glass in the heated region of about 10³ to 10⁵ dPas, preferably from about 10⁴ dPas, is increased to at least 1000 rpm, preferably to more than 2000 rpm, particularly preferred to more than 5000 rpm for shaping the bypass (52).

15. The method of claim 13 or 14, wherein the rotational speed is accelerated at least by 200 1/min², preferably at least by 500 1/min², particularly preferred by at least 1000 1/min².

## Revendications

1. Arrangement pour le façonnage de corps en verre (16), comprenant une pluralité de stations d'usinage (10, 10') qui possèdent respectivement un mandrin de serrage (14) destiné à accueillir un corps en verre (16), comprenant en entraînement rotatif (12) destiné à entraîner en rotation chaque mandrin de serrage (14), comprenant au moins une source de chauffage (18) destinée à chauffer le corps en verre (16), et comprenant une commande (20) qui est couplée à l'entraînement rotatif de telle sorte que les mandrins de serrage (14) peuvent être entraînés avec une vitesse de rotation variable, **caractérisé en ce que** les corps en verre (16) peuvent être transférés entre des stations d'usinage (10, 10') sélectionnées dont la vitesse de rotation peut respectivement être régulée individuellement.

2. Arrangement selon la revendication 1, **caractérisé en ce que** la vitesse de rotation est réglable à une valeur supérieure à 600 t/min., de préférence d'au moins 1000 t/min., notamment de préférence d'au moins 2000 t/min., tout particulièrement de préférence d'au moins 10000 t/min.

3. Arrangement selon la revendication 1 ou 2, **caractérisé en ce qu'**au moins une source de chauffage (18) est présente, laquelle est réalisée sous la forme d'un chalumeau, d'un laser, d'une buse à air chaud, d'un réchauffeur de gaz chauffé par résistance ou d'un radiateur à infrarouge, laquelle entoure de préférence au moins partiellement les corps en verre (16).

4. Arrangement selon l'une des revendications précédentes, **caractérisé en ce qu'**il existe en outre un corps de façonnage (36) qui peut être approché contre un corps en verre (16) entraîné en rotation afin d'assister un façonnage du fond, un moyen servant à entraîner le corps en verre (16) avec une vitesse de rotation réduite inférieure à 300 t/min. étant présent.

5. Arrangement selon l'une des revendications précédentes, **caractérisé par** au moins un dispositif de manipulation (22) destiné à transférer les corps en verre (16) entre des stations d'usinage (10, 10') sélectionnées.

6. Arrangement selon l'une des revendications précédentes, **caractérisé en ce que** les mandrins de serrage (14, 14') peuvent être stoppés pour le transfert des corps en verre (16) entre des stations d'usinage (10, 10') sélectionnées afin de permettre un transfert des corps en verre (16) à l'arrêt.

7. Arrangement selon l'une des revendications précédentes, **caractérisé en ce que** la source de chauffage (18) est configurée pour un chauffage sélectif du corps en verre (16) et le mandrin de serrage (14) peut être positionné dans le sens axial par rapport à la source de chauffage (18").

8. Arrangement selon l'une des revendications précédentes, **caractérisé en ce que** des paliers magnétiques (42, 44) sont présents pour supporter le mandrin de serrage (14).

9. Procédé de façonnage de corps en verre (16) avec lequel, en utilisant un arrangement selon l'une des revendications précédentes, les corps en verre (16) sont entraînés en rotation, sont chauffés au moins localement à leur température de ramollissement et sont façonnés, la vitesse de rotation pendant l'opération de chauffage et/ou de façonnage étant modifiée.

10. Procédé selon la revendication 9, avec lequel des corps en verre (16) sont façonnés sous la forme de flacons pharmaceutiques en verre borosilicate, et avec lequel les corps en verre (16) sont chauffés jusqu'à une température de ramollissement à laquelle la viscosité est comprise dans la plage de 10³ à 10⁵ dPas.

11. Procédé selon la revendication 9 ou 10, avec lequel, pour le façonnage du fond d'un flacon en verre, un tube en verre (16) est tout d'abord entraîné en rotation et chauffé, un corps de façonnage (36) est ensuite approché depuis l'extérieur au niveau d'une extrémité (30) du tube en verre (16) à une vitesse de rotation réduite, laquelle est inférieure à 300 t/min, de préférence inférieure à 100 t/min, jusqu'à ce que le tube en verre (16) se ferme et qu'un fond (40) se forme.

12. Procédé selon la revendication 11, avec lequel, après la formation du fond (40), la vitesse de rotation est modifiée, notamment augmentée, jusqu'à ce qu'une épaisseur de matériau uniforme s'établisse dans la zone du fond.

13. Procédé selon la revendication 12 pour le façonnage d'une dérivation (52), avec lequel un tube en verre (16) est chauffé au niveau d'une zone partielle de sa surface à l'arrêt ou avec une vitesse de rotation inférieure à 100 t/min., de préférence inférieure à 50 t/min., jusqu'à une viscosité dans la plage d'environ 10³ à 10⁵ dPas, et ensuite la vitesse de rotation est accélérée jusqu'à ce qu'il se produise dans la zone chauffée une convexité symétrique vers l'extérieur afin de produire une dérivation.

14. Procédé selon la revendication 13, avec lequel la vitesse de rotation est augmentée à partir d'une viscosité du verre dans la plage chauffée d'environ 10³ à 10⁵ dPas, de préférence d'environ 10⁴ dPas, à une valeur d'au moins 1000 t/min., de préférence à plus de 2000 t/min., notamment de préférence à plus de 5000 t/min. en vue de façonner la dérivation (52).

15. Procédé selon la revendication 13 ou 14, avec lequel la vitesse de rotation est accélérée d'au moins 200 t/min², de préférence d'au moins 500 t/min², notamment de préférence d'au moins 1000 t/min².
